# EUROPÄISCHE PATENTSCHRIFT

(11) **EP 3 574 509 B1**
(45) Veröffentlichungstag und Bekanntmachung des Hinweises auf die Patenterteilung: **28.04.2021**
(21) Anmeldenummer: 18713803.7
(22) Anmeldetag: 07.03.2018
(51) Int. Cl.: H01F 5/04, H01F 27/28, H01F 27/36, H02G 15/00

(54) **VORRICHTUNG ZUM VERBINDEN VON ABSCHIRMUNGSROHREN EINES HOCHSPANNUNGSGERÄTS**
DEVICE FOR CONNECTING SCREENING TUBES OF A HIGH-VOLTAGE APPLIANCE
DISPOSITIF POUR RELIER DES TUBES DE BLINDAGE D'UN APPAREIL À HAUTE TENSION

(30) Priorität: 23.03.2017 DE 102017204922
(43) Veröffentlichungstag der Anmeldung: 04.12.2019
(73) Patentinhaber: Siemens Energy Global GmbH & Co. KG, 81739 München (DE)
(72) Erfinder: HOPPE, Jens, 90592 Schwarzenbruck (DE); RUDOLPH, Oliver, 91126 Schwabach (DE); SCHLAGER, Johann, 90475 Nürnberg (DE); VELKOV, Vassil, 91452 Wilhermsdorf (DE); WENDE, Thomas, 90559 Burgthann (DE)
(86) Internationale Anmeldenummer: PCT/EP2018/055545
(87) Internationale Veröffentlichungsnummer: WO 2018/172069

(56) Entgegenhaltungen:
- EP-A1- 1 997 117
- DE-A1-102010 063 979
- DE-C- 890 073
- US-A- 2 066 321

## Beschreibung

Die Erfindung betrifft eine Vorrichtung zum Verbinden von Abschirmungsrohren eines elektrischen Hochspannungsgeräts mit einem umfänglich geschlossenen Verbindungsstück, das Einführabschnitte ausbildet, die jeweils in ein Rohrende eines Abschirmungsrohres einführbar sind, und Befestigungsmitteln zum Festsetzen der Einführabschnitte an dem jeweiligen Abschirmungsrohr.

Die Erfindung betrifft ferner ein elektrisches Gerät zum Anschluss an ein Hochspannungsnetz mit einem Kern, einer einen Kernabschnitt des Kerns umschließende Wicklung, einem mit einem Isolierfluid befüllbaren Kessel, in dem der Kern und jede Wicklung angeordnet sind, und einer Verbindungsleitung, die einen inneren Leiter und eine den Leiter umschließendes Abschirmungsrohr umfasst und sich in dem Kessel von der Wicklung zu einer Anschlussstelle erstreckt.

Eine solche Vorrichtung und ein solches elektrisches Gerät sind aus der DE 890 073 C bereits bekannt. Dort ist ein umfängliches Verbindungsstück erkennbar, dass sich verjüngende Einführabschnitte ausbildet, die jeweils in Rohrenden eines Abschirmungsrohres einführbar sind. Weiterhin sind Befestigungsmittel offenbart, mit deren Hilfe das Verbindungsstück in den Rohrabschnitten fixiert werden kann.

Weiterer Stand der Technik ist aus der US 2 066 221 A und aus der DE 102010063979 A1 bereits bekannt.

Ferner weisen beispielsweise Transformatoren und Drosselspulen eine Verbindungsleitung auf, die sich über mehrere Meter innerhalb eines mit Isolierfluid befüllten Kessels von einer Wicklung zu einer Anschlussstelle hin erstreckt. Die Anschlussstelle ist beispielsweise eine Anschlusselektrode für eine Hochspannungsdurchführung, die einen Hochspannungsleiter einer Hochspannungsdurchführung kontaktiert. Die Hochspannungsdurchführung ist in der Regel mit einem Freiluftanschluss ausgerüstet, der mit einer Freiluftleitung eines Hochspannungsversorgungsnetzes verbunden werden kann. Der Transformator ist dann an das Hochspannungsversorgungsnetz angeschlossen und stellt ausgangsseitig eine gewünschte Wechselspannung für eine oder mehrere Phasen bereit.

Die Verbindungsleitung im Kessel des elektrischen Geräts besteht gemäß dem Stand der Technik neben einem inneren Leiter aus mehreren elektrisch leitfähigen Abschirmungsrohren, die über ein ebenfalls leitfähiges Verbindungsstück miteinander verbunden sind. Die Abschirmungsrohre erstrecken sich ihrerseits innerhalb eines Barrierensystems aus Pressspan, so dass die beim Betrieb auftretenden hohen Feldstärken gesteuert werden können.

Das vorbekannte Verbindungsstück bildet zwei Einführabschnitte aus, deren Außendurchmesser in etwa dem Innendurchmesser des jeweils zugeordneten Abschirmungsrohres entspricht, so dass die Einführabschnitte in das jeweilige Rohrende einführbar sind und dort den gewünschten elektrischen Kontakt mit dem jeweiligen Abschirmungsrohr bereitstellen. Die vorbekannte Vorrichtung, also das vorbekannte Verbindungsstück, bildet Gewindenocken aus, so dass durch Einsatz einer Schraube die Rohrenden durch die Schraube miteinander verklemmt werden können.

Der vorbekannten Vorrichtung und dem vorbekannten elektrischen Gerät haftet der Nachteil an, dass die Möglichkeiten für einen Toleranzausgleich begrenzt sind. Die Rohrenden müssen vielmehr einen zuvor festgelegten Abstand in Längsrichtung zueinander aufweisen, um ein Festklemmen der Abschirmungsrohre miteinander zu ermöglichen.

Aulgabe der Erfindung ist es daher, eine Vorrichtung und ein elektrisches Gerät der eingangs genannten Art bereitzustellen, mit denen ein Toleranzausgleich und gleichzeitig eine einfache Montage der Verbindungsleitung ermöglicht ist.

Die Erfindung löst diese Aufgabe aufgrund von der eingangs genannten Vorrichtung durch Klemmstücke, deren Außenkontur formkomplementär zu der Innenkontur des jeweils zugeordneten Einführabschnittes ausgebildet ist, so dass jedes Klemmstück in den ihm zugeordneten Einführabschnitt von Innen einführbar ist, wobei die Befestigungsmittel an den Klemmstücken ausgebildet sind.

Ausgehend vor dem eingangs genannten elektrischen Gerät löst die Erfindung die Aufgabe dadurch, dass das Abschirmungsrohr wenigstens zwei Rohrelemente aufweist, wobei jedes Rohrelement einem anderen Rohrelement stirnseitig gegenüberliegt und die Rohrelemente mit einer erfindungsgemäßen Vorrichtung miteinander verbunden sind.

Erfindungsgemäß ist die Vorrichtung zur Verbindung des Abschirmungsrohres aus mehreren Komponenten zusammengesetzt. So umfasst die erfindungsgemäße Vorrichtung neben dem Verbindungsstück wenigstens zwei separate Klemmstücke, die mit den Einführabschnitten der Vorrichtung zusammenwirken und von innen in die Einführabschnitte einführbar sind.

Wesentlich ist, dass das Klemmstück innerhalb des jeweiligen Einführabschnitts verschiebbar ist, wobei die Befestigungsmittel zum Festsetzen der Klemmstücke am Verbindungsstück und gleichzeitig an dem jeweiligen Abschirmungsrohr dienen. Somit kann der Einführabschnitt bezüglich der Befestigungsmittel vor dem Festsetzen verschoben werden, so dass aufgrund der Längserstreckung des jeweiligen Einführabschnitts ein Toleranzausgleich in Längsrichtung ermöglicht ist. Dies erhöht die Flexibilität bei der Montage des erfindungsgemäßen elektrischen Geräts beträchtlich. Darüber hinaus ist die erfindungsgemäße Vorrichtung einfach und kostengünstig herstellbar.

Vorteilhafterweise liegen die Klemmstücke an der Innenwandung des Verbindungsstücks an.

Gemäß einer bevorzugten Ausgestaltung der Erfindung ist das Klemmstück elastisch verformbar. Durch die elastische Verformbarkeit kann ein leichter Klemmsitz zwischen Klemmstück und Verbindungsstück bereitgestellt werden, in dem das Klemmstück zusammengedrückt in den Einführabschnitt eingeführt wird. Dieser leichte Klemmsitz vereinfacht die Montage weiter.

Gemäß einer bevorzugten Ausgestaltung der Erfindung ist jeder Einführabschnitt im Querschnitt kreisförmig ausgebildet, wobei der Außendurchmesser jedes Einführabschnitts etwas kleiner ist als der Innendurchmesser des kreisrunden Abschirmungsrohres. Gemäß dieser vorteilhaften Weiterentwicklung kann das Verbindungsstück in das jeweils zugeordnete Abschirmrohr eingeführt werden, wobei gleichzeitig ein elektrischer Kontakt zwischen Abschirmungsrohr und Verbindungsstück hergestellt ist.

Gemäß einer bevorzugten Variante der Erfindung ist jedes Klemmstück als Klemmring ausgeführt, dessen Außendurchmesser etwas kleiner ist als der Innendurchmesser des jeweils zugeordneten Einführabschnitts. Hierbei ist es vorteilhaft, wenn der Klemmring einen Öffnungsspalt begrenzt, durch den die elastische Verformbarkeit herbeigeführt ist. Der Klemmring kann gemäß dieser Variante der Erfindung unter Verkleinerung des Spalts zusammengedrückt und in den Einführabschnitt von innen eingeführt werden. Anschließend entspannt sich der Klemmring und liegt unter Bereitstellung eines leichten Klemmsitzes innerhalb des Einführabschnitts an dessen Innenwandung an. Nun kann der Einführabschnitt in das jeweilige Abschirmungsrohr eingeführt werden und anschließend beispielsweise mit Hilfe einer Schraubverbindung die Befestigung zwischen Abschirmungsrohr und Klemmstück vollzogen werden. Gemäß einer bevorzugten Variante weist jeder Einführabschnitt Langlöcher auf, wobei jedes Langloch einem Befestigungsmittel des zugeordneten Klemmstücks zugeordnet ist. Aufgrund der Zuordnung zwischen Langloch und Befestigungsmittel erstreckt sich nach der Montage der erfindungsgemäßen Vorrichtung an den Abschirmungsrohren der Verbindungsleitung das in das Befestigungsmittel eingreifende Befestigungselement durch das Langloch. Aufgrund des Langlochs kann das Befestigungselement und innerhalb des Langlochs und somit das Klemmstück im Einführbereich in Längsrichtung verschoben werden, so dass auf diese Weise ein einfacher Toleranzausgleich bei gleichzeitiger fester mechanischer und zuverlässiger elektrischer Verbindung ermöglicht ist. Unter der "Zuordnung" des Langlochs ist zu verstehen, dass das Befestigungsmittel des Klemmstücks, also z.B. eine Bohrung mit Innengewinde fluchtend oder mit anderen Worten in radialer Richtung genau unter oder vor dem Langloch angeordnet ist. Somit kann beispielsweise eine Schraube mit ihrem Außengewinde als Befestigungselement von außen durch die Wandung des Abschirmungsrohres in das Innengewinde im Klemmstück geschraubt werden, wobei sich die Schraube durch das Langloch erstreckt. Vor dem Festziehen der Schraube kann das Klemmstück bewegt so ein Toleranzausgleich erfolgen.

Zweckmäßigerweise begrenzt jeder Einführabschnitt einseitig geöffnete Schlitze. Auf diese Weise sind Einführfinger ausgebildet, die mit ihrem freien Ende elastisch verbogen werden können. Dabei weist der Einführabschnitt eine formkomplementäre Außenkontur zur Innenkontur der Abschirmungsrohre auf. Sind die Abschirmungsrohre beispielsweise kreisförmige Rohre, ist auch der Einführabschnitt im Querschnitt kreisförmig ausgebildet, wobei der Außendurchmesser des Einführabschnitts dem Innendurchmesser des jeweils zugeordneten Abschirmungsrohres entspricht. Beim Einführen werden die Einführfinger des Einführabschnitts elastisch nach innen gebogen und pressen im Folgenden gegen die Innenwand des Abschirmungsrohres, so dass ein zuverlässiger elektrischer Kontakt zwischen den Abschirmungsrohren bereitgestellt ist.

Vorteilhafterweise bildet das Verbindungsstück für die zugeordneten Abschirmungsrohre einen zwischen den Einführabschnitten angeordneten Anschlag aus, der die Einführabschnitte jeweils umfänglich, also radial nach außen hin, überragt. Der Anschlag vereinfacht die Montage der erfindungsgemäßen Vorrichtung.

Vorteilhafterweisen weisen die Einführabschnitte verschiedene Innendurchmesser auf. Auf diese Weise ist die Verbindung von Abschirmungsrohren ermöglicht, die unterschiedliche Innendurchmesser aufweisen. Hierbei sind ist jeder Einführabschnitt hohlzylindrisch ausgebildet und begrenzt eine im Querschnitt kreisförmige Innenkontur.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: eine Vorrichtung gemäß dem Stand der Technik und
- Figur 2: ein Ausführungsbeispiel der erfindungsgemäßen Vorrichtung für ein erfindungsgemäßes elektrisches Gerät verdeutlichen.

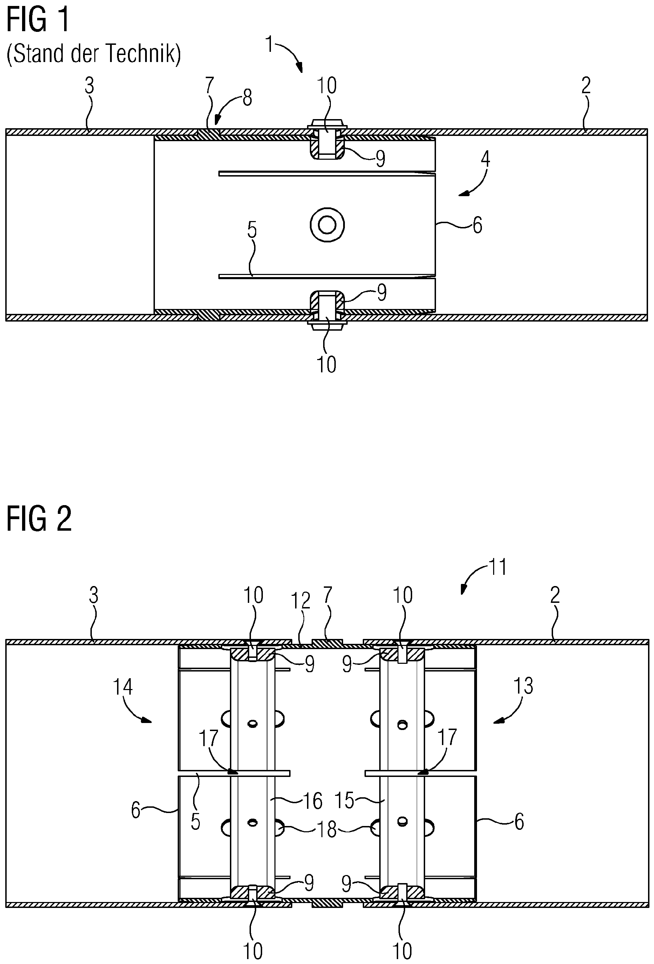

Figur 1 zeigt eine Vorrichtung 1 gemäß dem Stand der Technik, die zum Verbinden zweier Abschirmungsrohre 2 und 3 vorgesehen ist. Die Abschirmungsrohre 2, 3 sind im Querschnitt kreisförmig ausgebildet und weisen den gleichen Durchmesser auf. Die Abschirmungsrohre 2, 3 sind mit anderen Worten gleich dick ausgebildet. Abschirmungsrohre dieser Art werden in Leistungstransformatoren, insbesondere in Transformatoren für die Hochspannungsgleichstromübertragung eingesetzt. Der figürlich nicht dargestellte Transformator weist einen fluiddichten Kessel auf, der mit einem Isolierfluid, beispielsweise einem mineralischen Öl oder einem Esteröl, befüllt ist. In dem mit Öl befüllten Kessel ist ferner ein magnetisierbarer Kern mit Schenkeln und die Schenkel miteinander verbindenden Jochen angeordnet, wobei wenigstens ein Schenkel von zwei Wicklungen konzentrisch umgeben ist. Wird an einer der besagten Wicklungen eine Wechselspannung angelegt, wird in der anderen Wicklung eine Spannung induziert, die dem Verhältnis der Windungszahlen der beiden Wicklungen entspricht. Die Wirkungsweise von Transformatoren ist jedoch grundsätzlich bekannt, so dass dieser Stelle hierauf nicht genauer eingegangen zu werden braucht.

Von wenigstens einer Wicklung erstreckt sich innerhalb des Kessels des Transformators eine Verbindungsleitung zu einer Anschlussstelle, die in Kontakt mit dem Innenleiter einer Hochspannungsdurchführung ist. Die Hochspannungsdurchführung weist ein vom Kessel abgewandtes freies Ende auf, das mit einem Freiluftanschluss zum Anschluss einer luftisolierten Leitung eines Hochspannungsversorgungsnetzes ausgerüstet ist. Auf diese Weise ist der Anschluss einer Wicklung an ein externes Hochspannungsversorgungsnetz ermöglicht.

Insbesondere bei hohen Spannungs- und Strombelastungen müssen die entstehenden elektrischen Felder des Verbindungsleiters kontrolliert werden. Daher umfasst der Verbindungsleiter einen inneren den Strom führenden Leiter, der beispielsweise aus einem Bündel von Seilen oder Bandleitern besteht, und Abschirmungsrohre 2 und 3, die auf dem Potenzial des Strom führenden Leiters liegen, wobei sich der Leiter innerhalb der Abschirmungsrohre 2, 3 erstreckt. Die Abschirmungsrohre 2, 3 sind aus einem elektrisch leitfähigen Material, beispielsweise Kupfer, gefertigt. Da der Verbindungsleiter 1 und somit auch die Abschirmungsrohre 2, 3 eine Länge von 3-15m aufweisen können, sind in der Praxis mehrere Abschirmungsrohre 2, 3 erforderlich, die stirnseitig mittels einer Vorrichtung 1 mechanisch und elektrisch miteinander verbunden sind.

Die in Figur 1 gezeigte Vorrichtung 1 gemäß dem Stand der Technik verfügt über einen Einführabschnitt 4, der einseitig geschlossene Schlitze 5 begrenzt, so dass Einführfinger 6 ausgebildet sind. Aufgrund der Schlitze 5 können die Einführfinger 6 leicht elastisch nach innen gebogen werden, so dass das Einführen des Einführabschnitts 4 in das Abschirmungsrohr 2 erleichtert ist. Darüber hinaus pressen die Einführfinger 6 in der eingeführten Stellung von innen gegen das Abschirmungsrohr 2, so dass ein guter elektrischer Kontakt zwischen der Vorrichtung 1 und dem Abschirmungsrohr 2 bereitgestellt ist. An der von dem Einführabschnitt 4 abgewandten Seite verfügt die Vorrichtung 1 über einen Anschlag 7, der die aus der Außenkontur des Einführabschnitts 4 aufragt und in einer Ausnehmung 8 des Abschirmungsrohres 3 eingerastet ist. Auf diese Weise ist die Vorrichtung 1 in dem Abschirmungsrohr 3 fixiert. Anschließend kann das Abschirmungsrohr 2 über den Einführabschnitt 4 aufgeschoben werden.

Schließlich weist die vorbekannte Vorrichtung 1 Befestigungsmittel 9 in Gestalt von Gewindehülsen oder Gewindenocken auf, die von der Seitenwand der Vorrichtung 1 radial nach innen ragen und mit einem Innengewinde versehen sind. Nach dem Einrasten des Anschlags 7 sind die Gewindehülsen genau zwischen den Rohrenden der Abschirmungsrohre 2 und 3 angeordnet. Durch das Einschrauben einer Befestigungsschraube 10 in die Gewindehülse 9 können somit die Enden der Abschirmungsrohre 2 und 3 an der Vorrichtung 1 miteinander verklemmt werden.

Nachteilig an der bekannten Lösung ist, dass hier passgenau gearbeitet werden muss und kein Toleranzausgleich in Längs- und Umfangsrichtung der Abschirmungsrohre 2 und 3 ermöglicht ist.

Figur 2 zeigt ein Ausführungsbeispiel der erfindungsgemäßen Vorrichtung 11, die ein als Rohrstutzen ausgebildetes Verbindungsstück 12 aufweist, das an seinen beiden Seiten Einführabschnitte 13 und 14 aufweist. Die Einführabschnitte 13 und 14 sind einseitig geschlitzt, so dass auf beiden Seiten des Verbindungsstücks 12 Einführfinger 6 ausgebildet sind, die beim Einführen der in die Abschirmungsrohre 2 beziehungsweise 3 elastisch nach innen gebogen werden können und somit einen Klemmsitz und guten elektrischen Kontakt zwischen dem Verbindungsstück 12 und dem jeweiligen Abschirmungsrohr 2 und 3 ermöglichen.

Die erfindungsgemäße Vorrichtung 11 umfasst ferner separate Klemmstücke 15 und 16, die ringförmig und formkomplementär zum Verbindungsstück 12 ausgebildet sind. Genauer gesagt ist das Verbindungsstück 12 kreiszylindrisch ausgebildet, wobei der Innendurchmesser des Verbindungsstücks 12 im jeweiligen Einführabschnitt 13, 14 etwas größer ist als der Außendurchmesser des jeweiligen Klemmstücks 15 beziehungsweise 16. Es ist erkennbar, dass die Klemmstücke 15 und 16 durch einen in Längsrichtung durchgängigen Spalt 17 begrenzen, der es ermöglicht, dass die Klemmstücke 15 unter Verkleinerung ihres Außendurchmessers elastisch verbogen und somit besser in den jeweiligen Einführabschnitt 13 beziehungsweise 14 eingefügt werden können.

Im Bereich der Einführabschnitte 13 und 14 sind jeweils Langlöcher 18 erkennbar, die fluchtend zu einem in den Klemmstücken ausgebildeten Befestigungsmittel 9 angeordnet sind. Bei dem Befestigungsmittel 9 handelt es sich um ein einfaches Durchgangsloch mit Innengewinde. Ferner ist ein Anschlag 7 erkennbar, welcher in die Außenkontur des Verbindungsstückes 12 umfänglich, also in radialer Richtung nach außen überragt, so dass die Enden der Abschirmungsrohre 2 und 3 gegen den Anschlag 7 stoßen und eine Begrenzung beim Einführen gebildet ist.

In dem jeweiligen Abschirmungsrohr 2 bzw. 3 sind einfache Durchgangsbohrungen vorgesehen. Die Langlöcher und die Befestigungsmittel des Klemmstücks werden bei der Montage der Verbindungsleitung fluchtend zueinander ausgerichtet, so dass eine Schraube als Befestigungselement von außen durch die Durchgangsbohrung des Abschirmungsrohres 3 und das jeweilige Langloch 18 des Verbindungsstücks 12 geschoben und schließlich in Eingriff mit der Gewindehülse 9 gebracht.

Aufgrund des Langloches 18 können die Klemmstücke 15, 16 bezüglich des Verbindungsstücks 12 verschoben werden, so dass in Längsrichtung und Umfangsrichtung der Abschirmungsrohre 2 und 3 ein Toleranzausgleich ermöglicht ist. Darüber hinaus können die Abschirmungsrohre 2, 3 im Rahmen der Erfindung einfach und schnell miteinander verbunden werden.

## Patentansprüche

1. Vorrichtung (11) zum Verbinden von Abschirmungsrohren (2,3) eines elektrischen Hochspannungsgeräts mit
- einem umfänglich geschlossenen Verbindungsstück (12), das Einführabschnitte (13,14) ausbildet, die jeweils in ein Rohrende eines Abschirmungsrohres (2,3) einführbar sind, und
- Befestigungsmitteln (9) zum Festsetzen der Einführabschnitte (13,14) an dem jeweiligen Abschirmungsrohr (2,3),
**gekennzeichnet durch**
Klemmstücke (15,16), deren Außenkontur formkomplementär zu der Innenkontur des dem Klemmstück (15,16) jeweils zugeordneten Einführabschnittes (13,14) ausgebildet ist, so dass jedes Klemmstück (15,16) in den ihm zugeordneten Einführabschnitt (13,14) von Innen einführbar ist, wobei die Befestigungsmittel (9) an den Klemmstücken (15,16) ausgebildet sind.

2. Vorrichtung (11) nach Anspruch 1,
**dadurch gekennzeichnet, dass** jedes Klemmstück (15,16) elastisch verformbar ist.

3. Vorrichtung (11) nach Anspruch 1 oder 2,
**dadurch gekennzeichnet, dass** jeder Einführabschnitt (13,14) im Querschnitt kreisförmig ausgebildet ist, wobei der Außendurchmesser jedes Einführabschnitts (13,14) etwas kleiner ist als der Innendurchmesser des kreisrunden Abschirmungsrohres (2,3).

4. Vorrichtung (11) nach einem der vorhergehenden Ansprüche, **dadurch gekennzeichnet, dass** jedes Klemmstück (15,16) als Klemmring ausgeführt ist, dessen Außendurchmesser etwas kleiner ist als der Innendurchmesser jeweils zugeordneten Einführabschnitts (13,14).

5. Vorrichtung (11) nach Anspruch 4,
**dadurch gekennzeichnet, dass** jeder Klemmring (15,16) einen Öffnungsspalt (17) begrenzt, so dass der Klemmring (15,16) elastisch verformbar ist.

6. Vorrichtung (11) nach einem der vorhergehenden Ansprüche,
**dadurch gekennzeichnet, dass** jeder Einführabschnitt (13,14) Langlöcher (18) ausbildet, wobei jedes Langloch (18) fluchtend zu einem Befestigungsmittel (9) des zugeordneten Klemmstücks (15,16) angeordnet ist.

7. Vorrichtung (11) nach einem der vorhergehenden Ansprüche,
**dadurch gekennzeichnet, dass** jeder Einführabschnitt (13,14) einseitig geöffnete Schlitze (5) begrenzt.

8. Vorrichtung (11) nach einem der vorhergehenden Ansprüche, **dadurch gekennzeichnet, dass** das Verbindungsstück (12) für die zugeordneten Abschirmungsrohre (2,3) einen zwischen den Einführabschnitten (13,14) angeordneten Anschlag (7) ausbildet, der die Einführabschnitte (13,14) jeweils umfänglich überragt.

9. Vorrichtung (11) nach einem der vorhergehenden Ansprüche, **dadurch gekennzeichnet , dass** die Einführabschnitte (13, 14) verschiedene Innendurchmesser aufweisen.

10. Elektrisches Gerät zum Anschluss an ein Hochspannungsnetz mit
- einem Kern,
- einer einen Kernabschnitt des Kerns umschließende Wicklung,
- einem mit einem Isolierfluid befüllbaren Kessel, in dem der Kern und jede Wicklung angeordnet sind, und
- einer Verbindungsleitung die einen inneren Leiter und ein den Leiter umschließendes Abschirmungsrohr (2,3) umfasst und sich in dem Kessel von der Wicklung zu einer Anschlussstelle erstreckt,
**dadurch gekennzeichnet, dass** das Abschirmungsrohr wenigstens zwei Rohrelemente (2,3) aufweist, wobei jedes Rohrelement (2,3) einem anderen Rohrelement stirnseitig gegenüberliegt, und wobei die Rohrelemente (2,3) mit einer Vorrichtung (11) nach einem der vorgenannten Ansprüche miteinander verbunden sind.

## Claims

1. Device (11) for connecting screening tubes (2, 3) of an electric high-voltage appliance having
- a peripherally closed connecting piece (12) which configures insertion sections (13, 14) which can be respectively introduced into a tube end of a screening tube (2, 3), and
- fastening means (9) for attaching the insertion sections (13, 14) to the respective screening tube (2, 3),
**characterized by**
clamping pieces (15, 16), the outer contour of which is of dimensionally complementary configuration with respect to the inner contour of the insertion section (13, 14) which is respectively assigned to the clamping piece (15, 16), with the result that each clamping piece (15, 16) can be inserted from the inside into the insertion section (13, 14) which is assigned to it, the fastening means (9) being configured on the clamping pieces (15, 16).

2. Device (11) according to Claim 1,
**characterized in that**
each clamping piece (15, 16) is elastically deformable.

3. Device (11) according to Claim 1 or 2,
**characterized in that**
each insertion section (13, 14) is of circular configuration in cross section, the external diameter of each insertion section (13, 14) being somewhat smaller than the internal diameter of the circular screening tube (2, 3).

4. Device (11) according to one of the preceding claims,
**characterized in that**
each clamping piece (15, 16) is configured as a clamping ring, the external diameter of which is somewhat smaller than the internal diameter of the respectively assigned insertion section (13, 14).

5. Device (11) according to Claim 4,
**characterized in that**
each clamping ring (15, 16) delimits an opening gap (17), with the result that the clamping ring (15, 16) is elastically deformable.

6. Device (11) according to one of the preceding claims,
**characterized in that**
each insertion section (13, 14) configures slots (18), each slot (18) being arranged such that it is aligned with a fastening means (9) of the associated clamping piece (15, 16).

7. Device (11) according to one of the preceding claims,
**characterized in that**
each insertion section (13, 14) delimits slots (5) which are open on one side.

8. Device (11) according to one of the preceding claims,
**characterized in that**
the connecting piece (12) for the associated screening tubes (2, 3) configures a stop (7) which is arranged between the insertion sections (13, 14) and protrudes in each case peripherally beyond the insertion sections (13, 14).

9. Device (11) according to one of the preceding claims,
**characterized in that**
the insertion sections (13, 14) have different internal diameters.

10. Electric appliance for connecting to a high-voltage network having
- a core,
- a winding which encloses a core section of the core,
- a vessel which can be filled with an insulating fluid and in which the core and each winding are arranged, and
- a connecting line which comprises an inner conductor and a screening tube (2, 3) which encloses the conductor, which connecting line extends in the vessel from the winding to a connecting point,
**characterized in that**
the screening tube has at least two tube elements (2, 3), each tube element (2, 3) lying opposite another tube element on the end side, and the tube elements (2, 3) being connected to one another by way of a device (11) according to one of the preceding claims.

## Revendications

1. Dispositif (11) de liaison de tubes (2, 3) de blindage d'un appareil électrique de haute tension, comprenant
- une pièce (12) de liaison, qui est fermée sur le pourtour et qui constitue des parties (13, 14) d'introduction, qui peuvent être introduites chacune dans une extrémité d'un tube (2, 3) de blindage, et
- des moyens (9) de fixation pour fixer les parties (13, 14) d'introduction au tube (2, 3) de blindage respectif, **caractérisé par**
des pièces (15, 16) de serrage, dont le contour extérieur est de forme complémentaire du contour intérieur de la partie (13, 14) d'introduction associée respectivement à la pièce (15, 16) de serrage, de manière à pouvoir introduire de l'intérieur chaque pièce (15, 16) de serrage dans la partie (13, 14) d'introduction qui lui est associée, les moyens (9) de fixation étant constitués sur les pièces (15, 16) de serrage.

2. Dispositif (11) suivant la revendication 1,
**caractérisé en ce que**
chaque pièce (15, 16) de serrage est déformable élastiquement.

3. Dispositif (11) suivant l'une des revendications 1 ou 2,
**caractérisé en ce que**
chaque partie (13, 14) d'introduction est de section transversale circulaire, le diamètre extérieur de chaque partie (13, 14) d'introduction étant quelque peu plus petit que le diamètre intérieur du tube (2, 3) de blindage de section circulaire.

4. Dispositif (11) suivant l'une des revendications précédentes,
**caractérisé en ce que**
chaque pièce (15, 16) de serrage est réalisée sous la forme d'un anneau de serrage, dont le diamètre extérieur est quelque peu plus petit que le diamètre intérieur de la partie (13, 14) d'introduction, qui lui est associée.

5. Dispositif (11) suivant la revendication 4,
**caractérisé en ce que**
chaque anneau (15, 16) de serrage délimite un intervalle (17) d'ouverture de manière à ce que l'anneau (15, 16) de serrage puisse être déformé élastiquement.

6. Dispositif (11) suivant l'une des revendications précédentes,
**caractérisé en ce que**
chaque partie (13, 14) d'introduction constitue des boutonnières (18), chaque boutonnière (18) étant alignée avec un moyen (9) de fixation de la pièce (15, 16) de serrage associée.

7. Dispositif (11) suivant l'une des revendications précédentes,
**caractérisé en ce que**
chaque partie (13, 14) d'introduction délimite des fentes (5) ouvertes d'un côté.

8. Dispositif (11) suivant l'une des revendications précédentes,
**caractérisé en ce que**
la pièce (12) de liaison constitue, pour les tubes (2, 3) de blindage associés, une butée (7), qui est disposée entre les parties (13, 14) d'introduction et qui sur le pourtour dépasse des parties (13, 14) d'introduction.

9. Dispositif (11) suivant l'une des revendications précédentes,
**caractérisé en ce que**
les parties (13, 14) d'introduction ont des diamètres intérieurs différents.

10. Appareil électrique de raccordement à un réseau de haute tension comprenant
- un noyau,
- un enroulement entourant une partie du noyau,
- un chaudron qui peut être rempli d'un fluide isolant et dans lequel sont disposés le noyau et chaque enroulement, et
- une ligne de liaison, qui comprend un conducteur intérieur et un tube (2, 3) de blindage entourant le conducteur et qui s'étend dans le chaudron de l'enroulement à un point de connexion,
**caractérisé en ce que**
le tube de blindage a au moins deux éléments (2, 3) de tube, dans lequel chaque élément (2, 3) de tube est opposé du côté frontal à un autre élément de tube et dans lequel les éléments (2, 3) de tube sont reliés l'un à l'autre par un dispositif (11) suivant l'une des revendications précédentes.
